# EUROPEAN PATENT APPLICATION

(11) **EP 4 607 605 A1**
(43) Date of publication of application: **27.08.2025**
(21) Application number: 25159810.8
(22) Date of filing: 25.02.2025
(51) Int. Cl.: H01M 4/134, H01M 4/36, H01M 4/38, H01M 4/62, H01M 10/0525, H01M 10/0567, H01M 10/0569

(54) **NEGATIVE ELECTRODE PLATE, BATTERY, AND ELECTRIC APPARATUS**

(30) Priority: 26.02.2024 CN 202410211511
(71) Applicant: Ningde Amperex Technology Limited, Ningde City, Fujian Province 352100 (CN)
(72) Inventor: LI, Xin, Ningde City, Fujian Province, 352100 (CN); LIN, Xiaoping, Ningde City, Fujian Province, 352100 (CN); SU, Yisong, Ningde City, Fujian Province, 352100 (CN); XIE, Yuansen, Ningde City, Fujian Province, 352100 (CN)
(74) Representative: Icosa

(57) **Abstract**

An electric apparatus, and relate to the field of batteries. The negative electrode plate includes a negative electrode current collector and a negative electrode active material layer disposed on at least one side surface of the negative electrode current collector, where the negative electrode active material layer includes a silicon-carbon composite material and a lanthanide compound.

## Description

### TECHNICAL FIELD

This application relates to the field of batteries, and specifically, to a negative electrode plate, a battery, and an electric apparatus.

### BACKGROUND

Currently, the energy density of lithium-ion batteries is insufficient and urgently needs to be increased. A silicon material has a relatively high theoretical gram capacity (approximately 4200 mAh/g) and exhibits a broad application prospect in lithium-ion batteries. A silicon-based material added into a negative electrode can effectively increase the energy density. However, during charge and discharge cycles, the silicon material undergoes a volume change of 120% to 300% with intercalation and deintercalation of lithium ions, leading to pulverization of the silicon-based material and its detachment from a current collector, thereby leading to deteriorated conductivity of the negative electrode and degraded cycling performance of the lithium-ion battery.

### SUMMARY

In view of the foregoing problems, this application provides a negative electrode plate, a battery, and an electric apparatus to increase the energy density of the battery and improve the cycling performance of the battery.

According to a first aspect, this application provides a negative electrode plate including a negative electrode current collector and a negative electrode active material layer disposed on at least one side surface of the negative electrode current collector, where the negative electrode active material layer includes a silicon-carbon composite material and a lanthanide compound.

During cycling, silicon-carbon composite materials undergo expansion and contraction, which results in ion channel disconnections between silicon-carbon composite materials, leading to inconsistent lithium intercalation degrees of different silicon-carbon composite materials, thereby significantly deteriorating the electrochemical performance of a secondary battery. In technical solutions of some embodiments of this application, the lanthanide compound is distributed in pores of the negative electrode active material layer and forms solid-solid contact with the silicon-carbon composite material, which compensates for the ion channel disconnections caused by expansion and contraction of the silicon-carbon composite material. Thus, this improves the overall lithium intercalation uniformity of the negative electrode active material layer, enhancing the utilization of an ion channel network in the negative electrode active material layer, thereby increasing the energy density and cycling retention rate of the secondary battery and reducing the swelling rate of the secondary battery.

In some embodiments, a chemical formula of the lanthanide compound is Li₃ₓLaz_{2/3-X}TiO₃, and 0<x<2/3; and the lanthanide compound serves as a good conductor for lithium ions and can improve the ion transport capability of an anode; and/or
at least part of the lanthanide compound is distributed in pores of the negative electrode active material layer.

In some embodiments, the chemical formula of the lanthanide compound is Li_{0.33}La_{0.56}TiO₃.

In some embodiments, based on a mass of the negative electrode active material layer, a mass percentage of the silicon element is A%, and a mass percentage of the carbon element is B%, where 20≤A≤40, and 50≤B≤70; and optionally, 25≤A≤30, and 58≤B≤66.

In some embodiments, the negative electrode active material layer satisfies at least one of the following:

A and B satisfy the following relational expression: 0.3≤A/B≤0.8, and optionally 0.38≤A/B≤0.52. Controlling A/B can ensure both the stability and uniform energy density of a negative electrode active material. Based on the mass of the negative electrode active material layer, a mass percentage of the lanthanum element is C%, where 0.1≤C≤4, and optionally 1≤C≤2.

In some embodiments, the negative electrode active material layer satisfies at least one of the following:

A and C satisfy the following relational expression: 2.78≤A×C≤111.2, and optionally 25≤AxC≤50. Controlling A×C allows the battery to have both good cycling performance and high energy density.

A, B, and C satisfy the following relational expression: 0.365×(A+B)<C<2.92×(A+B). Controlling A, B, and C to satisfy the above relational expression can ensure both the stability and uniform energy density of the negative electrode active material.

In some embodiments, the negative electrode active material layer includes a linear conductive agent, and an average diameter of the linear conductive agent is D nm, where 0.5≤D≤20, and optionally 0.5≤D≤3.

In some embodiments, an average particle size of the silicon-carbon composite material is E µm, where 6≤E≤13, and optionally 7≤E≤10.

In some embodiments, D and E satisfy the following relational expression: 0.038≤D/E≤3.33, and optionally 0.06≤D/E≤2.2.

According to a second aspect, this application provides a battery including the negative electrode plate according to the foregoing embodiments.

In some embodiments, the battery further includes an electrolyte, the electrolyte including a linear ester, where based on a mass of the electrolyte, a mass percentage of the linear ester is X%, and 20≤X≤80; and selecting the linear ester as an organic solvent can improve the film formation uniformity of an electrode protection film, thereby improving the cycling performance; and/or the linear ester includes at least one selected from the group consisting of ethyl methyl carbonate, dimethyl carbonate, diethyl carbonate, dipropyl carbonate, methyl propyl carbonate, ethyl propyl carbonate, methyl propionate, methyl butyrate, ethyl acetate, ethyl propionate, ethyl butyrate, and methyl acetate.

In some embodiments, the battery satisfies at least one of the following:
based on the mass of the negative electrode active material layer, the mass percentage of the silicon element is A%, and the mass percentage of the lanthanum element is C%, where A and C respectively satisfy the following relational expressions with X: 556≤A×X≤2224, and 5≤C×X≤200; and optionally, 1000≤A×X≤1500, and 50≤C×X≤70. Controlling A×X and C×X allows the battery to have both good cycling performance and high energy density.

The electrolyte further includes fluoroethylene carbonate; and based on the mass of the electrolyte, a mass percentage of fluoroethylene carbonate is F%, where 1.6≤A/F≤15, and optionally 5≤A/F≤10.

According to a third aspect, this application provides an electric apparatus including the battery according to the foregoing embodiments.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. Moreover, throughout the accompanying drawings, the same reference signs represent the same components. In the accompanying drawings:
FIG. 1 is a distribution diagram of various elements at a same local position on a surface of a negative electrode plate in Example 1; and
FIG. 2 is an SEM image of a cross-section of the negative electrode plate in Example 1.

### DETAILED DESCRIPTION OF EMBODIMENTS

The following describes in detail some embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of some embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of some embodiments of this application, "a plurality of" means more than two, unless otherwise specifically defined.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that some embodiments described herein may be combined with other embodiments.

In the description of some embodiments of this application, the term "a plurality of" means more than two (inclusive). Similarly, "a plurality of groups" means more than two (inclusive) groups, and "a plurality of pieces" means more than two (inclusive) pieces.

In the description of some embodiments of this application, orientations or positional relationships indicated by the technical terms "thickness", "upper", "lower", "inside", "outside", and the like are based on the orientation or positional relationships shown in the accompanying drawings, and are merely for ease and brevity of description of these embodiments of this application rather than indicating or implying that the means or elements mentioned must have specific orientations or must be constructed or manipulated according to specific orientations, and therefore shall not be construed as any limitation on these embodiments of this application.

In the description of some embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in some embodiments of this application as suitable to specific situations.

Currently, the energy density of lithium-ion batteries is insufficient and urgently needs to be increased. A silicon material added can effectively increase the energy density, but the silicon material undergoes significant volume expansion during charge and discharge cycles. Therefore, the silicon material added leads to deteriorated battery performance, increased swelling rate, and degraded cycling performance.

Currently, the main strategies to improve the electrochemical performance of the silicon material include: nanostructuring the silicon material; and preparing a silicon-carbon composite material and a silicon-oxygen composite material. However, the swelling rate of such silicon anode battery is still relatively high, and the cycling performance still needs to be improved.

To effectively alleviate the problems of high swelling rate and poor cycling performance of the silicon anode battery, a negative electrode plate can be designed. A silicon-carbon composite material and a lanthanide additive are combined to form a silicon anode, so that the energy density of the battery can be increased, and an ion transport channel of the silicon anode can be effectively improved, thereby effectively reducing the swelling rate of the battery and improving the cycling performance of the battery.

According to some embodiments of this application, this application provides a negative electrode plate including a negative electrode current collector and a negative electrode active material layer disposed on at least one side surface of the negative electrode current collector, where the negative electrode active material layer comprises a silicon-carbon composite material and a lanthanide compound.

The negative electrode current collector has two opposite surfaces in its thickness direction, and the negative electrode active material layer is disposed on either or both of the two opposite surfaces of the negative electrode current collector.

The silicon-carbon composite material is a composite material composed of the silicon element and the carbon element, which serves as a negative electrode active material. The negative electrode plate in these embodiments of this application is a silicon anode containing the silicon element, and the negative electrode active material layer is also referred to as a mixture layer. In some embodiments, the negative electrode plate is a pure silicon anode including the silicon-carbon composite material but including no graphite, so that a high energy density can be achieved.

The lanthanide compound refers to a compound containing the lanthanum (La) element. In some embodiments, the lanthanide compound is an oxide of the lanthanum element and other metal elements, such as element Li and element Ti.

In these embodiments of this application, the lanthanide compound is added into the silicon-carbon composite material to improve an ion transport channel and lithium intercalation uniformity of the silicon-carbon composite material, effectively improving the ion transport capability of the silicon-carbon composite material, thereby effectively improving the cycling performance of the battery and reducing the swelling rate of the battery, and increasing the energy density.

According to some embodiments of this application, a chemical formula of the lanthanide compound is Li₃ₓLa_{2/3-X}TiO₃, and 0<x<2/3. For example, the chemical formula of the lanthanide compound is Li_{0.12}La_{0.63}TiO₃, Li_{0.33}La_{0.56}TiO₃, or Li_{1.2}La_{0.27}TiO₃.

According to some embodiments of this application, at least part of the lanthanide compound is distributed in pores of the negative electrode active material layer.

In some embodiments, the lanthanide compound can be distributed in the pores of the negative electrode active material layer and/or on the surface of the negative electrode active material. When the lanthanide compound is entirely distributed on the surface of the negative electrode active material or entirely distributed in the pores of the negative electrode active material layer, the lanthanide compound does not fully exert its effect.

According to some embodiments of this application, based on a mass of the negative electrode active material layer, a mass percentage of the silicon element is A%, and a mass percentage of the carbon element is B%, where 20≤A≤40, and 50≤B≤70; and optionally, 25≤A≤30, and 58≤B≤66. For example, the value of A may be 20, 25, 30, 35, or 40, or falls within a range defined by any two of these values; and the value of B may be 50, 55, 58, 60, 66, or 70, or falls within a range defined by any two of these values.

The mass percentage of the silicon element refers to a mass percentage of all of the silicon element in the negative electrode active material layer. In some embodiments, the silicon element mainly comes from the silicon-carbon composite material.

The mass percentage of the carbon element refers to a mass percentage of all of the carbon element in the negative electrode active material layer. In some embodiments, the carbon element mainly comes from the silicon-carbon composite material and can also come from a carbon material added as a conductive agent.

According to some embodiments of this application, A and B satisfy the following relational expression: 0.3≤A/B≤0.8, and optionally 0.38≤A/B≤0.52. For example, the value of A/B may be 0.3, 0.38, 0.45, 0.52, 0.6, 0.7, or 0.8, or falls within a range defined by any two of these values.

According to some embodiments of this application, based on the mass of the negative electrode active material layer, the mass percentage of the lanthanum element is C%, where 0.1≤C≤4, and optionally 1≤C≤2. For example, the value of C may be 0.1, 1, 2, 3, or 4, or falls within a range defined by any two of these values.

The mass percentage of the lanthanum element refers to a mass percentage of all of the lanthanum element in the negative electrode active material layer. In some embodiments, the lanthanum element mainly comes from the lanthanide compound, and the amount of the lanthanide compound added can be controlled to control the mass percentage of the lanthanum element in the negative electrode active material layer.

According to some embodiments of this application, A and C satisfy the following relational expression: 2.78≤A×C≤111.2, and optionally 25≤AxC≤50. For example, the value of A×C may be 2.78, 10, 25, 35, 40, 50, 70, 100, or 111.2, or falls within a range defined by any two of these values.

According to some embodiments of this application, A, B, and C satisfy the following relational expression: 0.365×(A+B)<C<2.92×(A+B).

According to some embodiments of this application, the negative electrode active material layer includes a linear conductive agent, and an average diameter of the linear conductive agent is D nm, where 0.5≤D≤20, and optionally 0.5≤D≤3. For example, the value of D may be 0.5, 1, 2, 3, 8, 10, 15, or 20, or falls within a range defined by any two of these values.

The linear conductive agent refers to a conductive material with a length-diameter ratio being greater than 1. In some embodiments, the linear conductive agent may be at least one selected from carbon nanotubes, graphene tubes, carbon fiber, or the like.

According to some embodiments of this application, the silicon-carbon composite material includes a silicon material and a carbon material compounded together. The silicon-carbon composite material is in a form of particles, with an average particle size being E µm, where 6≤E≤13, and optionally 7≤E≤10. For example, the value of E may be 6, 7, 8, 10, or 13, or falls within a range defined by any two of these values.

According to some embodiments of this application, D and E satisfy the following relational expression: 0.038≤D/E≤3.33, and optionally 0.06≤D/E≤2.2. For example, the value of D/E may be 0.038, 0.06, 0.1, 0.3, 0.5, 1, 1.5, 2.2, or 3.33, or falls within a range defined by any two of these values.

In some embodiments, the negative electrode current collector may use various materials suitable for serving as negative electrode current collectors for lithium-ion batteries. Specifically, a metal foil or a composite current collector can be used. Optionally, the negative electrode current collector includes: a copper foil, an aluminum foil, a nickel foil, a stainless steel foil, a titanium foil, nickel foam, copper foam, a polymer base coated with a conductive metal, or any combination thereof.

In some embodiments, the negative electrode active material layer further includes a binder, where the binder includes at least one of polyacrylate, polyimide, polyamide, polyamideimide, polyvinylidene fluoride, styrene-butadiene rubber (SBR), sodium alginate, polyvinyl alcohol, polytetrafluoroethylene, polyacrylonitrile, sodium carboxymethyl cellulose, potassium carboxymethyl cellulose, sodium hydroxymethyl cellulose, or potassium hydroxymethyl cellulose.

In some embodiments, the silicon-carbon composite material can be prepared using a chemical vapor deposition method. As an implementation method, a preparation process includes: placing a carbon precursor into a reactor, introducing a silane-argon mixed gas in a specified volume percentage, and performing deposition for a period of time at a specified temperature to obtain the silicon-carbon composite material. The carbon precursor includes but is not limited to biomass carbon, resin carbon, and petroleum coke. Controlling the deposition time of silane can control the amounts of the silicon element and carbon element in the silicon-carbon composite material. The average particle size of the silicon-carbon composite material can be controlled by the carbon precursor, and a particle size of the carbon precursor can be controlled by a method of crushing and then grading.

In some embodiments, the negative electrode plate can be prepared in the following method: the silicon-carbon composite material, the lanthanide compound, the binder, the conductive agent, and any other constituents are dispersed in a solvent (for example, deionized water) to form a negative electrode slurry; and the negative electrode slurry is applied on the negative electrode current collector, followed by processes such as drying and cold pressing to obtain the negative electrode plate (the silicon anode).

According to some embodiments of this application, this application provides a battery including the negative electrode plate according to any one of the foregoing solutions.

According to some embodiments of this application, the battery further includes an electrolyte, the electrolyte including a linear ester serving as an organic solvent, where based on a mass of the electrolyte, a mass percentage of the linear ester is X%, and 20≤X≤80.

The linear ester is an ester compound with a linear main chain. For example, the linear ester includes at least one selected from the group consisting of ethyl methyl carbonate (EMC), dimethyl carbonate (DMC), diethyl carbonate (DEC), dipropyl carbonate, methyl propyl carbonate, ethyl propyl carbonate, methyl propionate, methyl butyrate, ethyl acetate, ethyl propionate, ethyl butyrate, and methyl acetate.

In some embodiments, the organic solvent further includes an ether solvent, for example, including at least one of 1,3-dioxolane (DOL) or dimethoxyethane (DME).

According to some embodiments of this application, based on the mass of the negative electrode active material layer, the mass percentage of the silicon element is A%, and the mass percentage of lanthanum element is C%, where A and C respectively satisfy the following relational expressions with X: 556≤A×X≤2224, and 5≤C×X≤200; and optionally, 1000≤A×X≤1500, and 50≤C×X≤70.

In some embodiments, the electrolyte further includes a lithium salt, where the lithium salt includes at least one of an organic lithium salt or an inorganic lithium salt. Optionally, the lithium salt includes at least one of lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂ (LiTFSI), lithium bis(fluorosulfonyl)imide Li(N(SO₂F)₂) (LiFSI), lithium bis(oxalate) borate LiB(C₂O₄)₂ (LiBOB), or lithium difluoro(oxalato)borate LiBF₂(C₂O₄) (LiDFOB).

According to some embodiments of this application, the electrolyte further includes fluoroethylene carbonate serving as an anode film-forming additive; and based on the mass of the electrolyte, a mass percentage of fluoroethylene carbonate is F%, where 1.6≤A/F≤15, and optionally 5≤A/F≤10.

In some embodiments, the electrolyte further includes another additive. For example, the another additive includes at least one of succinonitrile, glutaronitrile, 1,3-propane sultone, or adiponitrile.

For a clearer understanding of the technical solutions of this application, these embodiments of this application are mainly described using the lithium-ion battery. Other types of batteries can be appropriately adjusted according to the battery types and are not further described.

The lithium-ion battery provided by this application includes an electrode assembly and the electrolyte according to any one of the foregoing solutions. The electrode assembly includes a positive electrode plate, the negative electrode plate according to any one of the foregoing solutions, and a separator.

### [Positive electrode plate]

According to some embodiments of this application, the positive electrode plate includes a positive electrode current collector and a positive electrode active material layer, where the positive electrode active material layer includes a positive electrode active material, a binder, and a conductive agent.

In some embodiments, the positive electrode current collector may be a metal foil or a composite current collector. For example, an aluminum foil may be used. The composite current collector may be formed by forming a metal material (copper, copper alloy, nickel, nickel alloy, titanium, titanium alloy, silver, silver alloy, or the like) on a polymer matrix.

In some embodiments, the positive electrode active material includes at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium iron manganese phosphate, lithium iron silicate, lithium vanadium silicate, lithium cobalt silicate, lithium manganese silicate, spinel-type lithium manganate, spinel-type lithium nickel manganate, or lithium titanate.

In some embodiments, the binder includes a binder polymer, for example, at least one of polyvinylidene fluoride, polytetrafluoroethylene, polyolefins, sodium carboxymethylcellulose, lithium carboxymethylcellulose, modified polyvinylidene fluoride, modified SBR rubber, or polyurethane. In some embodiments, the polyolefin binder includes at least one of polyethylene, polypropylene, polyester, polyvinyl alcohol, or polyacrylic acid.

In some embodiments, the conductive agent includes: a carbon-based material such as natural graphite, artificial graphite, carbon black, acetylene black, Ketjen black, or carbon fiber; a metal-based material such as metal powder or metal fiber of copper, nickel, aluminum, or silver; and a conductive polymer such as a polyphenylene derivative; or a mixture thereof.

### [Separator]

A material and shape of the separator are not particularly limited in this application, and any technology disclosed in the prior art may be used for the separator.

In some embodiments, the separator includes a polymer or an inorganic substance formed by a material stable to an electrolyte of this application. For example, the separator may include a matrix layer and a surface treatment layer.

The matrix layer is a non-woven fabric, film, or composite film having a porous structure, and a material of the matrix layer is at least one selected from polyethylene, polypropylene, polyethylene terephthalate, or polyimide. Specifically, the matrix layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the matrix layer, and the surface treatment layer may be a polymer layer, an inorganic substance layer, or a layer formed by mixing a polymer and an inorganic substance. The inorganic substance layer includes inorganic particles and a binder. The inorganic particles include at least one selected from aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is at least one selected from polyvinylidene fluoride, vinylidene fluoride-hexafluoropropylene copolymer, polyamide, polyacrylonitrile, polyacrylate ester, polyacrylic acid, polyacrylate salt, polyvinylpyrrolidone, polyvinyl ether, polymethyl methacrylate, polytetrafluoroethylene, or polyhexafluoropropylene. The polymer layer includes a polymer, and a material of the polymer is at least one selected from polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene).

In some embodiments, the positive electrode plate, the negative electrode plate, and the separator may be made into an electrode assembly through winding or lamination.

In some embodiments, the battery may include an outer package. The outer package may be used for packaging the electrode assembly and the electrolyte.

In some embodiments, the outer package of the battery may be a hard shell, for example, a hard plastic shell, an aluminum shell, or a steel shell. The outer package of the battery may alternatively be a soft pack, for example, a soft pouch. A material of the soft pack may be plastic. As the plastic, polypropylene, polybutylene terephthalate, polybutylene succinate, and the like may be listed.

According to some embodiments of this application, this application provides an electric apparatus including the battery according to any one of the foregoing solutions, where the battery is configured to supply electrical energy to the electric apparatus.

In some embodiments, the electric apparatus may be but is not limited to a mobile phone, a tablet computer, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

The following describes some embodiments of this application in more detail with reference to the following examples. Certainly, these examples do not limit the scope of one or more embodiments.

### Example 1

### (1) Preparation of negative electrode plate:

A carbon precursor (biomass carbon) was placed in a furnace, where an average particle size of the carbon precursor was 8.5 µm. A silane-argon mixed gas with silane in a volume concentration of 40% was introduced, and deposition was performed at a temperature of 500°C for 8 h to prepare a silicon-carbon composite material, where an average particle size of the silicon-carbon composite material was 9 µm. Raw materials including the silicon-carbon composite material, a lanthanide compound (Li_{0.33}La_{0.56}TiO₃), a binder (polyacrylic acid), and a linear conductive agent (carbon nanotubes) were dispersed in deionized water at a mass ratio of 83:2:14:1, where a percentage of the lanthanide compound added into the raw materials was 2%, and an average diameter of the linear conductive agent was 1 nm; and then a negative electrode slurry was prepared. The negative electrode slurry was applied on a negative electrode current collector (a copper foil with a thickness of 10 µm), followed by processes such as drying and cold pressing, to obtain a negative electrode plate.

### (2) Preparation of positive electrode plate:

A positive electrode active material lithium cobalt oxide (LCO), conductive carbon black (Super P), and a binder polyvinylidene fluoride (PVDF) were mixed at a weight ratio of 90:7:3. An appropriate amount of solvent N-methylpyrrolidone (NMP) was added. Then, the resulting mixture was stirred well to prepare a positive electrode slurry. The positive electrode slurry was applied on an aluminum foil, followed by drying in a vacuum oven at 100°C for 12 h to obtain a positive electrode plate.

(3) Preparation of electrolyte: In a dry argon environment, a linear ester (ethyl methyl carbonate) and a cyclic ester (propylene carbonate) were mixed, and 1,3-propane sultone (PST) and vinylene carbonate (VEC) were added into the resulting mixture, to prepare a mixed solution. Then, a fully dried lithium salt (LiPF₆) was dissolved in the mixed solution, and then the mixed solution was mixed well to prepare an electrolyte. Based on a total mass of the electrolyte, a percentage of PST was 3%, a percentage of VEC was 2%, a mass percentage of the lithium salt was 12.5%, a mass percentage of the linear ester was 50%, and the rest was the cyclic ester (propylene carbonate).

### (4) Preparation of lithium-ion battery:

The prepared positive electrode plate and negative electrode plate were each connected to a tab. A PE porous polymer film with a thickness of 9.5 µm was used as a separator. The positive electrode plate, separator, and negative electrode plate were stacked sequentially, so that the separator was located between the positive electrode plate and the negative electrode plate to provide separation. Then, the resulting stack was wound to obtain a jelly roll. The jelly roll was placed in an outer package. Then, the prepared electrolyte was injected, and sealing was performed, followed by processes such as formation, capacity testing, degassing, and trimming, to obtain a full cell.

### Other examples and Comparative example 1

Negative electrode plates and batteries in Examples 2 to 27 and Comparative example 1 were prepared using the same method as in Example 1, and parameters of the negative electrode plates during preparation and electrolyte constituents were shown in Table 1.

Electrolyte constituents in Examples 2 to 17 and Comparative example 1 were the same as those in Examples 1 to 3. In Examples 18 and 19, the percentage of the linear ester in the electrolyte was changed. In Examples 20 to 27, fluoroethylene carbonate (FEC) was added into the electrolyte and the percentage of fluoroethylene carbonate in the electrolyte was changed, while the percentages of the lithium salt, PST, and VEC remained unchanged, and the rest was the cyclic ester (propylene carbonate).

**Table 1 Preparation process parameters of negative electrode plates and electrolytes of examples and comparative example**

| No. | Preparation parameter of negative electrode plate | | | | Electrolyte | |
|---|---|---|---|---|---|---|
| | Deposition time (h) | Average particle size of carbon precursor (µm) | Percentage of lanthanide compound added | Average diameter of linear conductive agent (nm) | Mass percentage of linear ester X (%) | Mass percentage of fluoroethylene carbonate F (%) |
| Example 1 | 8 | 8.5 | 2% | 1 | 50 | 0 |
| Example 2 | 10 | 8.5 | 2% | 1 | 50 | 0 |
| Example 3 | 6 | 8.5 | 2% | 1 | 50 | 0 |
| Example 4 | 4 | 8.5 | 2% | 1 | 50 | 0 |
| Example 5 | 12 | 8.5 | 2% | 1 | 50 | 0 |
| Example 6 | 8 | 8.5 | 5% | 1 | 50 | 0 |
| Example 7 | 8 | 8.5 | 0.40% | 1 | 50 | 0 |
| Example 8 | 8 | 8.5 | 1.50% | 1 | 50 | 0 |
| Example 9 | 8 | 8.5 | 2.50% | 1 | 50 | 0 |
| Example 10 | 8 | 8.5 | 0.15% | 1 | 50 | 0 |
| Example 11 | 8 | 8.5 | 6.4% | 1 | 50 | 0 |
| Example 12 | 8 | 12.5 | 2% | 1 | 50 | 0 |
| Example 13 | 8 | 5.5 | 2% | 1 | 50 | 0 |
| Example 14 | 8 | 9.5 | 2% | 1 | 50 | 0 |
| Example 15 | 8 | 8.5 | 2% | 20 | 50 | 0 |
| Example 16 | 8 | 8.5 | 2% | 0.5 | 50 | 0 |
| Example 17 | 8 | 8.5 | 2% | 3 | 50 | 0 |
| Example 18 | 8 | 8.5 | 2% | 1 | 80 | 0 |
| Example 19 | 8 | 8.5 | 2% | 1 | 20 | 0 |
| Example 20 | 6 | 8.5 | 2% | 1 | 50 | 1.6 |
| Example 21 | 6 | 8.5 | 2% | 1 | 50 | 15 |
| Example 22 | 6 | 8.5 | 2% | 1 | 50 | 5 |
| Example 23 | 3 | 8.5 | 2% | 1 | 50 | 15 |
| Example 24 | 13 | 8.5 | 2% | 1 | 50 | 15 |
| Example 25 | 6 | 8.5 | 2% | 0.3 | 50 | 15 |
| Example 26 | 6 | 6.5 | 2% | 1 | 50 | 15 |
| Example 27 | 6 | 8.5 | 2% | 1 | 50 | 10 |
| Comparative example 1 | 8 | 8.5 | 0% | 1 | 50 | 0 |

### Tests

### I. Test of negative electrode plate

(1) Test for mass percentage of silicon element (A%), mass percentage of carbon element (B%), and mass percentage of lanthanum element (C%) in negative electrode active material layer:
   A negative electrode plate cross-section sample was prepared using an argon ion polishing technique and used for scanning electron microscope test.

A Philips XL-30 field emission scanning electron microscope was used to observe the negative electrode plate cross-section sample and capture scanning electron microscope images, and the microscope was used for performing test at 10 kV and 10 mA.

Under a condition of a magnification of 1k, the scanning electron microscope images were analyzed using an X-ray energy spectrum element image analysis technique to obtain values of A, B, and C.

(2) Test for average diameter (D nm) of conductive agent and average particle size (E µm) of silicon-carbon composite material particles in negative electrode active material layer:
A negative electrode plate cross-section sample was prepared using an argon ion polishing technique and used for scanning electron microscope test.

A Philips XL-30 field emission scanning electron microscope was used to observe the negative electrode plate cross-section sample and capture scanning electron microscope images, and the microscope was used for performing test at 10 kV and 10 mA.

Diameters of 100 curves were respectively measured using a scale function of the SEM and averaged to obtain the D value; and particle sizes of 100 silicon-carbon composite material particles were respectively measured using the scanning electron microscope and averaged to obtain the E value.

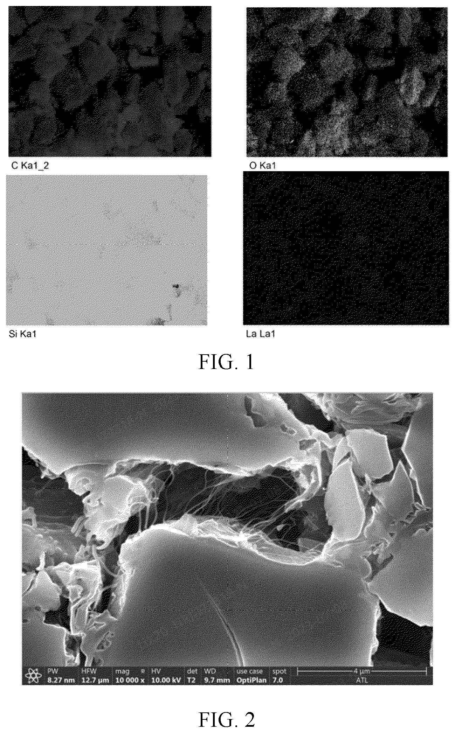

FIG. 1 is a distribution diagram of various elements (C, O, Si, and La) at a same local position on a surface of a negative electrode plate in Example 1. When four figures in FIG. 1 are superimposed, it can be seen that the distribution position of the lanthanum element does not overlap with distribution positions of the other elements, indicating that the lanthanide compound is distributed in pores of the negative electrode plate.

FIG. 2 is an SEM image of a cross-section of the negative electrode plate in Example 1, where the cross-section is a cross-section perpendicular to the surface of the negative electrode plate. It can be seen from FIG. 2 that negative electrode active materials are connected together through a linear material (a conductive agent).

### II. Battery performance test

(1) Energy density test: A thickness H1, length L1, and width W1 of the full cell were measured first, and then charge and discharge test was performed. At a test temperature of 25°C, the full cell was charged to 4.45 V at a constant current of 0.2C, then charged to 0.025C at a constant voltage, left standing for 5 minutes, and then discharged to 3.0 V at 0.2C. A discharge capacity obtained in this step was an initial capacity C_{capacity}, and a discharge plateau obtained was V_{capacity}. An energy density was equal to C_{capacity}XV_{capacity}/H1/L1/W1.
(2) Cycling test: At a test temperature of 25°C, the full cell was charged to 4.45 V at a constant current of 0.5C, then charged to 0.025C at a constant voltage, left standing for 5 minutes, and then discharged to 3.0 V at 0.5C. A discharge capacity obtained in this step was an initial capacity C0. Then, a 0.5C charge and 0.5C discharge cycling test was performed, and a discharge capacity at the 500th cycle was C1. A capacity retention rate was equal to C1/C0×100%.
(3) Swelling rate test: A thickness T₀ of a lithium-ion battery in an initial half-charged state was measured using a spiral micrometer. After 500 cycles of 0.5C charge/0.5C discharge, the lithium-ion battery was in a fully charged state, and a thickness T₁ of the lithium-ion battery at that time was measured using the spiral micrometer. Then, the thickness T₁ was compared with the thickness T₀ of the lithium-ion battery in the initial half-charged state to obtain a swelling rate of the fully charged lithium-ion battery at that time, where the swelling rate was equal to (T₁-T₀)/T₀×100%.

The test results are shown in Tables 2 to 7.

**Table 2 Test results**

| | Mass percentage of silicon element A (%) | Mass percentage of carbon element B (%) | A×C | A/B | A×X | Energy density | Cycling retention rate (%) | Swelling rate (%) |
|---|---|---|---|---|---|---|---|---|
| Example 1 | 27.8 | 62 | 35.3 1 | 0.45 | 1390 | 800 | 85 | 12.2 |
| Example 2 | 30 | 58 | 38.1 | 0.52 | 1500 | 821 | 83.20 | 13.2 |
| Example 3 | 25 | 66 | 31.7 5 | 0.38 | 1250 | 786 | 86.10 | 11.8 |
| Example 4 | 20 | 70 | 25.4 | 0.29 | 1000 | 765 | 88 | 11.0 |
| Example 5 | 40 | 50 | 50.8 | 0.8 | 2000 | 841 | 82 | 14.0 |

| | | | | | | | | |
|---|---|---|---|---|---|---|---|---|
| Note: In examples (Examples 3 to 5) in Table 2, the mass percentages of the lanthanum element in the negative electrode plates are the same (C=1.27), the average diameters of the linear conductive agents are the same (D=1), the average particle sizes of the silicon-carbon composite materials are the same (E=9), the mass percentages of the linear esters in the electrolytes are the same (X=50), and no fluoroethylene carbonate is added (F=0). Accordingly, D/E=0.11, and C×X=63.5. | | | | | | | | |

**Table 3 Test results**

| | Mass percentage of lanthanum element C (%) | A×C | C×X | Energy density | Cycling retention rate (%) | Swelling rate (%) |
|---|---|---|---|---|---|---|
| Example 1 | 1.27 | 35.31 | 63.5 | 800 | 85 | 12.2 |
| Example 6 | 4 | 111.2 | 200 | 772 | 88.10 | 11.9 |
| Example 7 | 0.1 | 2.78 | 5 | 815 | 83.10 | 12.8 |
| Example 8 | 1 | 27.8 | 50 | 802 | 85.10 | 12.4 |
| Example 9 | 2 | 55.6 | 100 | 784 | 87.10 | 12.2 |
| Example 10 | 0.05 | 1.39 | 2.5 | 817 | 80.2 | 13.2 |
| Example 11 | 5 | 139 | 250 | 752 | 88.2 | 11.8 |

| | | | | | | |
|---|---|---|---|---|---|---|
| Note: In examples (Example 1 and Examples 6 to 11) in Table 3, the mass percentages of the silicon element in the negative electrode plates are the same (A=27.8), the mass percentages of the carbon element are the same (B=62), the average diameters of the linear conductive agents are the same (D=1), the average particle sizes of the silicon-carbon composite materials are the same (E=9), the mass percentages of the linear esters in the electrolytes are the same (X=50), and no fluoroethylene carbonate is added (F=0). Accordingly, A/B=0.45, D/E=0.11, and A×X=1390. | | | | | | |

**Table 4 Test results**

| | Average particle size of silicon-carbon composite material E (µm) | D/E | Energy density | Cycling retention rate (%) | Swelling rate (%) |
|---|---|---|---|---|---|
| Example 1 | 9 | 0.11 | 800 | 85 | 12.2 |
| Example 12 | 13 | 0.08 | 791 | 85.60 | 11.9 |
| Example 13 | 7 | 0.17 | 803 | 83.80 | 12.8 |
| Example 14 | 10. | 0.1 | 801.5 | 84.20 | 12.3 |

| | | | | | |
|---|---|---|---|---|---|
| Note: In examples (Example 1 and Examples 12 to 14) in Table 4, the mass percentages of the silicon element in the negative electrode plates are the same (A=27.8), the mass percentages of the carbon element are the same (B=62), the mass percentages of the lanthanum element are the same (C=1.27), the average diameters of the linear conductive agents are the same (D=1), the mass percentages of the linear esters in the electrolytes are the same (X=50), and no fluoroethylene carbonate is added (F=0). Accordingly, A×C=35.31, A/B=0.45, A×X=1390, and C×X=63.5. | | | | | |

**Table 5 Test results**

| | Average diameter of linear conductive agent D (nm) | D/E | Energy density | Cycling retention rate (%) | Swelling rate (%) |
|---|---|---|---|---|---|
| Example 1 | 1 | 0.11 | 800 | 85 | 12.2 |
| Example 15 | 20 | 2.22 | 745 | 82.20 | 13.2 |
| Example 16 | 0.5 | 0.06 | 784 | 82.10 | 13.2 |
| Example 17 | 3 | 0.33 | 764 | 82.10 | 13.2 |

| | | | | | |
|---|---|---|---|---|---|
| Note: In examples (Example 1 and Examples 15 to 17) in Table 5, the mass percentages of the silicon element in the negative electrode plates are the same (A=27.8), the mass percentages of the carbon element are the same (B=62), the mass percentages of the lanthanum element are the same (C=1.27), the average particle sizes of the silicon-carbon composite materials are the same (E=9), the mass percentages of the linear esters in the electrolytes are the same (X=50), and no fluoroethylene carbonate is added (F=0). Accordingly, A×C=35.31, A/B=0.45, A×X=1390, and C×X=63.5. | | | | | |

**Table 6 Test results**

| | A×X | C×X | Energy density | Cycling retention rate (%) | Swelling rate (%) |
|---|---|---|---|---|---|
| Example 1 | 1390 | 63.5 | 800 | 85 | 12.2 |
| Example 18 | 2224 | 101.6 | 782 | 85.10 | 12.1 |
| Example 19 | 556 | 25.4 | 803 | 83.20 | 12.9 |

| | | | | | |
|---|---|---|---|---|---|
| Note: In examples (Example 1 and Examples 18 and 19) in Table 6, the mass percentages of the silicon element in the negative electrode plates are the same (A=27.8), the mass percentages of the carbon element are the same (B=62), the mass percentages of the lanthanum element are the same (C=1.27), the average diameters of the linear conductive agents are the same (D=1), the average particle sizes of the silicon-carbon composite materials are the same (E=9), and no fluoroethylene carbonate is added into the electrolyte (F=0). Accordingly, A×C=35.31, A/B=0.45, and D/E=0.11. | | | | | |

**Table 7 Test results**

| | Mass percentage of silicon element A (%) | Mass percentage of carbon element B (%) | Mass percentage of lanthanum element C (%) | Average diameter of linear conductive agent D (nm) | Average particle size of silicon-carbon composite material E (µm) | A×C | A/B | D/E | A×X | C×X | A/F | Energy density | Cycling retention rate (%) | Swelling rate (%) |
|---|---|---|---|---|---|---|---|---|---|---|---|---|---|---|
| Example 1 | 27.8 | 62 | 1.27 | 1 | 9 | 35.31 | 0.45 | 0.11 | 1390 | 63.5 | - | 800 | 85 | 12.2 |
| Example 20 | 27.8 | 62 | 1.27 | 1 | 9 | 35.31 | 0.45 | 0.11 | 1390 | 63.5 | 17.38 | 812 | 82.10 | 12.6 |
| Example 21 | 27.8 | 62 | 1.27 | 1 | 9 | 35.31 | 0.45 | 0.11 | 1390 | 63.5 | 1.85 | 789 | 86.20 | 11.8 |
| Example 22 | 27.8 | 62 | 1.27 | 1 | 9 | 35.31 | 0.45 | 0.11 | 1390 | 63.5 | 5.56 | 801 | 85 | 12.1 |
| Example 23 | 16 | 74 | 1.27 | 1 | 9 | 20.32 | 0.22 | 0.11 | 800 | 63.5 | 1.07 | 758 | 88.20 | 11.4 |
| Example 24 | 43 | 47 | 1.27 | 1 | 9 | 33.16 | 0.43 | 0.32 | 1359.05 | 59.71 | 2.87 | 796 | 78.10 | 16.9 |
| Example 25 | 27.8 | 62 | 1.27 | 0.3 | 9 | 32.60 | 0.43 | 0.33 | 1354.22 | 58.80 | 1.85 | 782 | 83.10 | 13.4 |
| Example 26 | 27.8 | 62 | 1.27 | 1 | 7 | 32.05 | 0.43 | 0.34 | 1349.39 | 57.89 | 1.85 | 791 | 84.20 | 13.1 |
| Example 27 | 27.8 | 62 | 1.27 | 1 | 9 | 31.49 | 0.43 | 0.34 | 1344.56 | 56.98 | 2.78 | 798 | 87.90 | 11.7 |
| Comparative example 1 | 28.3 | 62.8 | 0 | 1 | 9 | 0 | 0.45 | 0.11 | 1415 | 0 | - | 750 | 75.10 | 21.6 |

| | | | | | | | | | | | | | | |
|---|---|---|---|---|---|---|---|---|---|---|---|---|---|---|
| Note: In examples (Examples 20 to 27) in Table 7, the mass percentages of the linear esters in the electrolytes are the same (X=50), and fluoroethylene carbonate is added; and no lanthanum element is added into the negative electrode plate in Comparative example 1. | | | | | | | | | | | | | | |

It can be seen from the results of Tables 2 to 7 that:
as compared with Comparative example 1, in each of Examples 1 to 27, both the silicon-carbon composite material and the lanthanide compound are added into the negative electrode active material layer of the negative electrode plate, so that the energy density of the battery can be increased, the cycling performance of the battery can be improved, and the swelling rate can be reduced.

According to Examples 1 to 5, based on the mass of the negative electrode active material layer, when the mass percentage of the silicon element is controlled to be A%, and the mass percentage of the carbon element is controlled to be B%, where 20≤A≤40, 50≤B≤70, and 0.3≤A/B≤0.8; and optionally, 25≤A≤30, 58≤B≤66, and 0.38≤A/B≤0.52, the energy density of the battery can be increased, the cycling performance of the battery can be improved, and the swelling rate can be reduced.

According to Examples 6 to 11, based on the mass of the negative electrode active material layer, when the mass percentage of the lanthanum element is controlled to be C%, where 0.1≤C≤4, and 2.78≤A×C≤111.2; and optionally, 1≤C≤2, and 25≤A×C≤50, the energy density of the battery can be increased, the cycling performance of the battery can be improved, and the swelling rate can be reduced.

According to Examples 12 to 14, when the average particle size of the silicon-carbon composite material is controlled to be E µm, where 6≤E≤13, and 0.038≤D/E≤3.33; and optionally, 7≤E≤10, and 0.06≤D/E≤2.2, the energy density of the battery can be increased, the cycling performance of the battery can be improved, and the swelling rate can be reduced.

According to Examples 15 to 17, when the average diameter of the linear conductive agent is controlled to be D nm, where 0.5≤D≤20, and 0.038≤D/E≤3.33; and optionally, 0.5≤D≤3, and 0.06≤D/E≤2.2, the energy density of the battery can be increased, the cycling performance of the battery can be improved, and the swelling rate can be reduced.

According to Examples 18 and 19, when the mass percentage of the linear ester in the electrolyte is controlled to be X%, where 20≤X≤80, 556≤A×X≤2224, and 5≤C×X≤200; and optionally 1000≤A×X≤1500, and 50≤C×X≤70, the energy density of the battery can be increased, the cycling performance of the battery can be improved, and the swelling rate can be reduced.

According to Examples 20 to 27, when the mass percentage of fluoroethylene carbonate in the electrolyte is controlled to be F%, where 1.6≤A/F≤15, and optionally 5≤A/F≤10, the energy density of the battery can be increased, the cycling performance of the battery can be improved, and the swelling rate can be reduced.

The described embodiments are merely some but not all of these embodiments of this application. The detailed description of these embodiments of this application is not intended to limit the scope of this application, but merely to represent the selected embodiments of this application. All other embodiments obtained by persons of ordinary skill in the art based on these embodiments of this application without creative efforts shall fall within the protection scope of this application.

## Claims

1. A negative electrode plate, **characterized in that**, comprising a negative electrode current collector and a negative electrode active material layer disposed on at least one surface of the negative electrode current collector, wherein the negative electrode active material layer comprises a silicon-carbon composite material and a lanthanide compound.

2. The negative electrode plate according to claim 1, **characterized in that**, a chemical formula of the lanthanide compound is Li₃ₓLa_{2/3-X}TiO₃, and 0<x<2/3.

3. The negative electrode plate according to claim 1 or 2, **characterized in that**,at least a part of the lanthanide compound is distributed in pores of the negative electrode active material layer.

4. The negative electrode plate according to any one of claims 1 to 3, **characterized in that**, the chemical formula of the lanthanide compound is Li_{0.33}La_{0.56}TiO₃.

5. The negative electrode plate according to any one of claims 1 to 4, **characterized in that**, based on a mass of the negative electrode active material layer, a mass percentage of the silicon element is A%, and a mass percentage of the carbon element is B%, wherein 20≤A≤40, and 50≤B≤70.

6. The negative electrode plate according to claim 5, **characterized in that**, 0.3≤A/B≤0.8.

7. The negative electrode plate according to claim 6, **characterized in that**, based on the mass of the negative electrode active material layer, a mass percentage of the lanthanum element is C%, wherein 0.1≤C≤4, and optionally 1≤C≤2.

8. The negative electrode plate according to claim 7, **characterized in that**, 2.78≤A×C≤111.2.

9. The negative electrode plate according to claim 7, **characterized in that**, 0.365×(A+B)<C<2.92×(A+B).

10. The negative electrode plate according to any one of claims 1 to 6, **characterized in that**, the negative electrode plate satisfies at least one of the following:
(1) the negative electrode active material layer comprises a linear conductive agent, and an average diameter of the linear conductive agent is D nm, wherein 0.5≤D≤20,; or
(2) an average particle size of the silicon-carbon composite material is E µm, wherein 6≤E≤13.

11. The negative electrode plate according to claim 10, **characterized in that**, 0.038≤D/E≤3.33.

12. A battery, **characterized in that**, the battery comprises the negative electrode plate according to any one of claims 1 to 11.

13. The battery according to claim 12, **characterized in that**, the battery further comprises an electrolyte, wherein the electrolyte comprises a linear ester; wherein based on a mass of the electrolyte, a mass percentage of the linear ester is X%, and 20≤X≤80;
the linear ester comprises at least one selected from the group consisting of ethyl methyl carbonate, dimethyl carbonate, diethyl carbonate, dipropyl carbonate, methyl propyl carbonate, ethyl propyl carbonate, methyl propionate, methyl butyrate, ethyl acetate, ethyl propionate, ethyl butyrate, and methyl acetate; and
based on the mass of the negative electrode active material layer, the mass percentage of the silicon element is A%, wherein 556≤A×X≤2224.

14. The battery according to claim 13, **characterized in that**, the electrolyte further comprises fluoroethylene carbonate; and based on the mass of the electrolyte, a mass percentage of fluoroethylene carbonate is F%, wherein 1.6≤A/F≤15.

15. An electric apparatus, **characterized in that**, the electric apparatus comprises the battery according to any one of claims 12 to 14.
